# EUROPEAN PATENT APPLICATION

(11) **EP 4 593 105 A1**
(43) Date of publication of application: **30.07.2025**
(21) Application number: 25150102.9
(22) Date of filing: 02.01.2025
(51) Int. Cl.: H01M 4/131, H01M 4/36, H01M 4/505, H01M 4/525, H01M 10/0525, H01M 4/38

(54) **POSITIVE ELECTRODE ACTIVE MATERIALS, POSITIVE ELECTRODES, AND RECHARGEABLE LITHIUM BATTERIES**

(30) Priority: 09.01.2024 KR 20240003611
(71) Applicant: SAMSUNG SDI CO., LTD., Yongin-si, Gyeonggi-do 17084 (KR)
(72) Inventor: KIM, Sujin, 17084 Yongin-si (KR); KANG, Minkyeong, 17084 Yongin-si (KR); KWON, Seonyoung, 17084 Yongin-si (KR); KIM, Seon Hye, 17084 Yongin-si (KR); PARK, Zinmin, 17084 Yongin-si (KR); YI, Seungbeob, 17084 Yongin-si (KR)
(74) Representative: Marks & Clerk LLP

(57) **Abstract**

A positive electrode active material for a rechargeable lithium battery includes a first positive electrode active material including a layered lithium nickel-manganese-based composite oxide having a nickel content of at least 70 mol% based on 100 mol% of a total metal excluding lithium in the first positive electrode active material, and being in a form of secondary particles having an average particle diameter (D₅₀) of about 10 µm to about 25 µm, and a second positive electrode active material including a lithium cobalt-based oxide, being in the form of single particles having an average particle diameter (D₅₀) about 1 µm to about 9 µm, wherein a difference between the average particle diameter (D₅₀) of the secondary particles of the first positive electrode active material and the average particle diameter (D₅₀) of the single particles of the second positive electrode active material is at least about 5 µm.

## Description

### BACKGROUND

### 1. Field

One or more embodiments of the present disclosure relate to positive electrode active materials, positive electrodes including the same, and rechargeable lithium batteries.

### 2. Description of the Related Art

A portable information device (such as a cell phone, a laptop, smart phone, and/or the like) and/or an electric vehicle has used a rechargeable lithium battery having relatively high energy density and easy portability as a driving power source. Recently, research has been actively conducted to use a rechargeable lithium battery with high energy density as a driving power source for hybrid or electric vehicles or a power storage power source for an energy storage system (ESS) or a power wall.

Various positive electrode active materials have been investigated to realize rechargeable lithium batteries for applications to the uses. Among them, lithium nickel-based oxide, lithium nickel manganese cobalt composite oxide, lithium nickel cobalt aluminium composite oxide, and lithium cobalt oxide are mainly used as positive electrode active materials.

Recently, rechargeable lithium batteries are being researched and developed to increase energy density and lower prices. In order to increase energy density, there are methods of increasing a nickel content (e.g., amount), increasing electrode plate density, and/or applying a high voltage. In addition, in order to lower prices, there are methods of reducing a content (e.g., amount) of cobalt, a rare metal, and/or increasing a content (e.g., amount) of low-cost manganese. However, as the nickel content (e.g., amount) is increased, there are problems of deteriorating long-term cycle-life characteristics and thermal stability of the rechargeable lithium battery, and in addition, if high voltage driving conditions are also applied thereto, there may be a risk of even further worsening these existing problems. In addition, the higher the manganese content (e.g., amount), the lower the theoretical density, which brings about a problem of decreasing the electrode plate density.

### SUMMARY

One or more aspects of embodiments of the present disclosure are directed toward a positive electrode active material that may achieve high capacity, high energy density, high stability, and long cycle-life characteristics, and a positive electrode and a rechargeable lithium battery using the positive electrode active material.

Additional aspects will be set forth in part in the description which follows and, in part, will be apparent from the description, or may be learned by practice of the presented embodiments.

In one or more embodiments, a positive electrode active material includes a first positive electrode active material including a layered lithium nickel-manganese-based composite oxide having a nickel content (e.g., amount) of greater than or equal to about 70 mol% based on 100 mol% of a total metal excluding lithium in the first positive electrode active material, and (the first positive electrode active material) being in a form of secondary particles each formed by agglomerating a plurality of primary particles, wherein an average particle diameter (D₅₀) of the secondary particles is about 10 micrometers (µm) to about 25 µm, and a second positive electrode active material including a lithium cobalt-based oxide, and (the second positive electrode active material) being in a form of single particles (e.g., each being a monolithic particle), wherein an average particle diameter (D₅₀) of the single particles is about 1 µm to about 9 µm, and wherein a difference between the average particle diameter (D₅₀) of the secondary particles of the first positive electrode active material and the average particle diameter (D₅₀) of the single particles of the second positive electrode active material is greater than or equal to about 5 µm.

In one or more embodiments, a positive electrode for a rechargeable lithium battery includes a positive electrode current collector and a positive electrode active material layer on the positive electrode current collector and including the positive electrode active material.

In one or more embodiments, a rechargeable lithium battery includes the positive electrode, a negative electrode, and an electrolyte.

At least some of the above and other features of the invention are set out in the claims.

The positive electrode active material according to one or more embodiments and the positive electrode and rechargeable lithium battery using the positive electrode active material may concurrently (e.g., simultaneously) realize high capacity, high energy density, high stability, and long cycle-life characteristics while lowering the production costs.

### BRIEF DESCRIPTION OF THE DRAWINGS

The above and other aspects, features, and advantages of certain embodiments of the present disclosure will be more apparent from the following description taken in conjunction with the accompanying drawings.
FIGS. 1 - 4 are each a schematic diagram showing a rechargeable lithium battery according to one or more embodiments of the present disclosure.
FIG. 5 is a graph showing the cycle-life characteristics of the coin half-cells of Examples 1 to 3 and Comparative Examples 1 and 2.

### DETAILED DESCRIPTION

Hereinafter, example embodiments will be described in more detail so that those of ordinary skill in the art may easily implement them. However, the present disclosure may be embodied in many different forms and is not construed as limited to the example embodiments set forth herein.

The terminology used herein is used to describe embodiments only, and is not intended to limit the present disclosure. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Herein, it should be understood that terms such as "comprise(s)/comprising," "include(s)/including," or "have(has)/having" are intended to designate the presence of an embodied feature, number, step (e.g., act or task), element, and/or a (e.g., any suitable) combination thereof, but it does not preclude the possibility of the presence or addition of one or more other features, numbers, steps (e.g., acts or tasks), elements, and/or a (e.g., any suitable) combination thereof.

In the drawings, the thickness of layers, films, panels, regions, and/or the like, may be exaggerated for clarity and like reference numerals designate like elements throughout the present disclosure, and duplicative descriptions thereof may not be provided for conciseness. It will be understood that if (e.g., when) an element such as a layer, film, region, or substrate is referred to as being "on" another element, it may be directly on the other element or intervening elements may also be present. In contrast, if (e.g., when) an element is referred to as being "directly on" another element, there are no intervening elements present.

In addition, "layer" herein may include not only a shape or a layer formed on the whole surface if (e.g., when) viewed from a plan view, but also a shape or a layer formed on a partial surface.

In one or more embodiments, an average particle diameter may be measured by a method well suitable (known) to those skilled in the art, for example, by a particle size analyzer, for example, HORIBA, LA-950 laser particle size analyzer, or by a transmission electron microscope (TEM) or a scanning electron microscope (SEM). In one or more embodiments, it may obtain an average particle diameter value by measuring it using a dynamic light scattering method, performing data analysis, counting the number of particles for each particle size range, and calculating from the data. Unless otherwise defined, the average particle diameter may refer to a diameter (D50) of particles having a cumulative volume of 50 volume% in the particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In one or more embodiments, as used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image. In the present disclosure, when particles are spherical, "diameter" indicates an average particle diameter, and when the particles are non-spherical, the "diameter" indicates a major axis length.

Herein, "or" is not to be construed as an exclusive meaning, for example, "A or B" is construed to include A, B, A+B, and/or the like. Further, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As used herein, the term "Metal" is interpreted as a concept including ordinary metals, transition metals and metalloids (semi-metals). And the term "Group" as utilized herein refers to a group of the Periodic Table of Elements according to the 1 to 18 grouping system of the International Union of Pure and Applied Chemistry ("IUPAC").

### Positive Electrode Active Material

In one or more embodiments, a positive electrode active material for a rechargeable lithium battery includes a first positive electrode active material including a layered lithium nickel-manganese-based composite oxide having a nickel content (e.g., amount) of greater than or equal to about 70 mol% based on 100 mol% of a total metal excluding lithium in the first positive electrode active material, and being in a form of secondary particles each formed by agglomerating a plurality of primary particles, wherein an average particle diameter (D₅₀) of the secondary particles is about 10 µm to about 25 µm, and a second positive electrode active material including a lithium cobalt-based oxide and being in the form of single particles (e.g., each being a monolithic particle), wherein an average particle diameter (D₅₀) of the single particles is about 1 µm to about 9 µm, and wherein a difference between the average particle diameter (D₅₀) of the secondary particles of the first positive electrode active material and the average particle diameter (D₅₀) of the single particles of the second positive electrode active material is greater than or equal to about 5 µm.

The first positive electrode active material may have a problem and issue of deteriorating cycle-life characteristics due to structural and thermal instability in a high voltage region, but one or more embodiments of the present disclosure provides a method of lessening the problem of deteriorating cycle-life characteristics to realize long-term cycle-life characteristics and furthermore, increasing electrode plate density and enhancing capacity per volume to improve energy density by appropriately or suitably mixing the first positive electrode active material with the second positive electrode active material.

The first positive electrode active material and the second positive electrode active material have a different composition and a different particle diameter. The first positive electrode active material contains lithium nickel-manganese-based composite oxide with a nickel content (e.g., amount) of greater than or equal to about 70 mol%, which may be referred to as, for example, a cobalt-free high nickel-based positive electrode active material, and may be referred to or expressed (realized or formed) as large particles in the form of secondary particles. The second positive electrode active material contains lithium cobalt-based oxide and may be referred to or expressed (realized or formed) as small particles in the form of single particles.

The difference between the average particle diameter (D₅₀) of the secondary particles of the first positive electrode active material and the average particle diameter (D₅₀) of the single particles of the second positive electrode active material is greater than or equal to about 5 µm, for example, about 5 µm to about 20 µm, about 5 µm to about 15 µm, about 6 µm to about 14 µm, or about 7 µm to about 13 µm. For example, if (e.g., when) the average particle diameter (D₅₀) of the first positive electrode active material is a and the average particle diameter (D₅₀) of the second positive electrode active material is b, 5 µm ≤a-b≤15 µm, 6 µm ≤a-b≤14 µm, or 7 µm ≤a-b≤13 µm may be satisfied. Also, in one or more embodiments, 3b≤a≤4b may be satisfied. If (e.g., when) these particle size relationships are satisfied, the cycle-life characteristics of the positive electrode active material may be improved while maximizing or increasing capacity per volume by increasing the pellet density.

In one or more embodiments, based on a total weight of 100 wt% of the first positive electrode active material and the second positive electrode active materials, the first positive electrode active material may be included in an amount of about 25 wt% to about 95 wt%, for example, about 30 wt% to about 95 wt%, about 50 wt% to about 95 wt%, or about 50 wt% to about 75 wt%, and the second positive electrode active material may be included in an amount of about 5 wt% to about 75 wt%, for example, about 5 wt% to about 70 wt%, about 5 wt% to about 50 wt%, or about 25 wt% to about 50 wt%. When mixed at the above ratio, cycle-life characteristics of the positive electrode active material may be improved while maximizing or increasing the capacity per volume.

### First Positive Electrode Active Material

As the price of cobalt, a rare metal, has recently risen sharply, there is a demand and desire for the development of positive electrode active materials that exclude cobalt or reduce its content (e.g., amount). Among them, a positive electrode active material having an olivine crystal structure such as lithium iron phosphate (LFP), lithium manganese phosphate (LMP), lithium manganese iron phosphate (LMFP), and/or the like or a spinel crystal structure such as lithium manganese oxide (LMO) and/or the like has a limitation in realizing high capacity due to a small available lithium amount within the structure. In contrast, the layered lithium nickel-manganese-based positive electrode active material has a high lithium availability in the structure and has excellent or suitable capacity and efficiency characteristics, making it suitable as a material for high-capacity batteries. However, as cobalt, which plays a key role in the layered structure, is removed, structural stability decreases, resistance increases, and it becomes difficult to secure long cycle-life characteristics. In addition, the layered lithium nickel-manganese-based positive electrode active material, from which cobalt is excluded, may have a problem and issue of accelerated side reaction with an electrolyte under high-voltage and high-temperature conditions, resultantly increasing gas generation and deteriorating cycle-life characteristics.

Accordingly, in one or more embodiments of the present disclosure, large particles having a nickel content (e.g., amount) of greater than or equal to about 70 mol% in the layered lithium nickel-manganese-based positive electrode active material and in a form of secondary particles are applied, thereby increasing capacity and efficiency, and the lithium cobalt-based positive electrode active material in the form of single particles are mixed therewith, thereby overcoming the problem and issue of deteriorating cycle-life characteristics and increasing the density of the electrode plates to improve energy density.

In the lithium nickel-manganese-based composite oxide, the nickel content (e.g., amount) is greater than or equal to about 70 mol%, for example, about 70 mol% to about 85 mol%, about 70 mol% to about 83 mol%, about 70 mol% to about 80 mol%, or about 71 mol% to about 79 mol% based on 100 mol% of a total metal excluding lithium. If (e.g., when) the nickel content (e.g., amount) satisfies the above range, high capacity may be achieved and structural stability may be increased even if the cobalt content (e.g., amount) is reduced.

A manganese content (e.g., amount) may be, for example, greater than or equal to about 15 mol%, for example, about 15 mol% to about 30 mol%, about 20 mol% to about 30 mol%, or about 21 mol% to about 29 mol% based on 100 mol% of a total metal excluding lithium in the lithium nickel-manganese-based composite oxide. If (e.g., when) the manganese content (e.g., amount) satisfies the above range, high capacity and efficiency may be maintained while lowering costs.

In one or more embodiments, the lithium nickel-manganese-based composite oxide may be a lithium nickel-manganese-aluminium-based composite oxide that further includes aluminium in addition to nickel and manganese. If (e.g., when) the composite oxide contains aluminium, it is advantageous and beneficial to maintain a stable layered structure even if the cobalt element is excluded from the structure. In the lithium nickel-manganese-aluminium-based composite oxide, an aluminium content (e.g., amount) based on 100 mol% of a total metal excluding lithium may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol%. If (e.g., when) the aluminium content (e.g., amount) satisfies the above range, a stable layered structure may be maintained even if cobalt is excluded, the problem and issue of structure collapse due to charging and discharging may be suppressed or reduced, and long cycle-life characteristics of the positive electrode active material may be realized.

According to one or more embodiments, a concentration of aluminium in particles including the lithium nickel-manganese-based composite oxide may be substantially uniform. For example, it refers to that there is not a concentration gradient of aluminium from the center to the surface within the particle, or that the aluminium concentration in the inner portion of the particle is neither higher nor lower than in the outer portion, and that the aluminium within the particle is evenly distributed. This may be a structure obtained by using an aluminium raw material during precursor production without additional doping of aluminium during the synthesis of the lithium nickel-manganese-based composite oxide and thereby synthesizing a composite oxide using nickel-manganese-aluminium-based hydroxide as a precursor. The particle is in a form of a secondary particle in which a plurality of primary particles are agglomerated, and the aluminium content (e.g., amount) inside the primary particle may be substantially the same or similar regardless of the location of the primary particle. For example, if (e.g., when) a primary particle is selected at a random position in the cross-section of a secondary particle and the aluminium content (e.g., amount) is measured inside the primary particle rather than at its interface, regardless of the location of the primary particle, that is, whether the primary particle is close to the center of the secondary particle or close to the surface of the secondary particle, the aluminium content (e.g., amount) may be substantially the same/similar/uniform. In this structure, a stable layered structure may be maintained even if cobalt is absent or is present in a very small amount, and aluminium byproducts or aluminium aggregates are not generated, so that the capacity, efficiency, and cycle-life characteristics of the positive electrode active material may be improved at the same time.

In one or more embodiments, the lithium nickel-manganese-based composite oxide may be represented by Chemical Formula 1.

**Chemical Formula 1** **Liₐ₁Niₓ₁Mn_{y1}Al_{z1}M¹_{w1}O_{2-b1}X_{b1}**

In Chemical Formula 1, 0.9≤a1≤1.8, 0.7≤x1≤0.85, 0.15≤y1≤0.3, 0≤z1≤0.03, 0≤w1≤0.1, 0.9≤x1+y1+z1+w1 ≤1.1, and 0≤b1≤0.1, M¹ may be one or more elements selected from among boron (B), barium (Ba), calcium (Ca), cerium (Ce), chromium (Cr), iron (Fe), magnesium (Mg), molybdenum (Mo), niobium (Nb), silicon (Si), tin (Sn), strontium (Sr), titanium (Ti), vanadium (V), tungsten (W), yttrium (Y), and zirconium (Zr), and X may be one or more elements selected from among fluorine (F), phosphorous (P), and sulfur (S).

In one or more embodiments, in Chemical Formula 1, 0.9≤a1≤1.5, or 0.9≤a1≤1.2. In one or more embodiments, Chemical Formula 1 may contain aluminium, in these embodiments, 0.7≤x1≤0.84, 0.15≤y1≤0.29, 0.01≤z1≤0.03, and 0≤w1≤0.09.

In one or more embodiments, in Chemical Formula 1, for example, 0.7≤x1≤0.8, 0.2≤y1≤0.3, 0≤z1≤0.03, and 0≤w1≤0.1, or 0.7≤x1≤0.79, 0.2≤y1≤0.29, 0.01≤z1≤0.03, and 0≤w1≤0.09.

For example, in one or more embodiments, the lithium nickel-manganese-based composite oxide may not contain cobalt or may contain a small amount of cobalt and the cobalt content (e.g., amount) may be about 0 mol% to about 0.01 mol% based on 100 mol% of a total metal excluding lithium in the lithium nickel-manganese-based composite oxide.

The first positive electrode active material is in the form of secondary particles each made by agglomerating a plurality of primary particles. The shape of the secondary particles may be a sphere, an elliptical sphere, a polyhedron, or an irregular shape, and the primary particles constituting the secondary particles may be a sphere, an elliptical sphere, a plate shape (e.g., in a form of plates), and/or a (e.g., any suitable) combination thereof.

An average particle diameter (D₅₀) of the secondary particles of the first positive electrode active material is about 10 µm to about 25 µm, for example, about 10 µm to about 20 µm, about 11 µm to about 18 µm, or about 12 µm to about 16 µm. The average particle diameter (D₅₀) refers to a diameter of particles having a cumulative volume of 50 volume% in the particle size distribution that is obtained by measuring the size (diameter or major axis length) of about 20 particles at random in a scanning electron microscope image for positive electrode active materials.

If (e.g., when) small particles with an average particle diameter of less than about 10 µm are applied as the first positive electrode active material containing lithium nickel-manganese-based composite oxide, for example, the small particles in the form of single particles have lower lithium ion conduction characteristics than large particles in the form of secondary particles and thus may deteriorate overall performance, and in addition, because more conductive materials have to be added in the positive electrode to ensure sufficient electron conduction, there may be a problem and issue that capacity may not be maximized or increased. Furthermore, if (e.g., when) the small particles are applied as the first positive electrode active material, even if mixed with the second positive electrode active material, it is difficult to achieve effects of increasing the capacity per volume by increasing the electrode plate density. Unlike this, one or more embodiments of the present disclosure are to apply secondary particles with an average particle diameter of greater than or equal to about 10 µm as the first positive electrode active material to increase lithium ion conduction performance and thus secure high capacity, efficiency, and output characteristics by itself and in addition to mix a lithium cobalt-based second positive electrode active material with an average particle diameter of less than or equal to about 9 µm therewith to improve the cycle-life characteristics and also, increase the electrode plate density and thereby, achieve the effects of increasing the capacity per volume.

In one or more embodiments, the secondary particles of the first positive electrode active material may include core particles including the layered lithium nickel-manganese-based composite oxide, and a coating layer located on the surface of each of the core particles and containing a coating element selected from among Al, B, Mg, Ti, V, W, Y, Zr, and/or a (e.g., any suitable) combination thereof.

The lithium nickel-manganese-based composite oxide is susceptible to chemical attacks from components in an electrolyte, if (e.g., when) a battery is operated under high-voltage or high-temperature conditions, and thus may have severe side reactions with the electrolyte, resulting in increasing an amount of gas generation and thereby, deteriorating battery cycle-life and safety, but these problems may be solved by introducing a coating layer thereinto.

For example, in one or more embodiments, the coating layer may be an Al coating layer containing Al, and may optionally further contain elements such as B, Mg, Ti, V, W, Y, and/or Zr. If (e.g., when) an Al coating layer is introduced, the high voltage performance of the first positive electrode active material may be further improved.

Because a layered lithium nickel-manganese-based composite oxide may have significantly different residual lithium contents on the particle surface and different characteristics from oxides with a different composition, for example, lithium nickel-cobalt-manganese-based composite oxide, lithium nickel-cobalt-aluminium-based composite oxide, lithium cobalt-based oxide, and/or the like, it is impossible to form a satisfactory coating layer in the form of a substantially uniform film using any suitable coating method of the art. Accordingly, in one or more embodiments, a substantially uniform coating layer may be introduced into the first positive electrode active material by (i) adding a coating raw material to an aqueous solvent and mixing them to prepare a coating solution in which the salt is completely dissolved in a salt-dissolution method, (ii) adding core particles to this coating solution to proceed with coating, and (iii) removing and drying the solvent and then, performing a heat treatment. This is a salt-dissolution wet coating method, which may be said to be a pre-emptive method in which the salt, the coating raw material, is first completely dissolved, and then, the active material particles are added thereto. Through this method, the coating layer may be successfully formed in the form of substantially uniform and thin film on the surface of the layered lithium nickel-manganese-based composite oxide.

According to the coating method, compared to a general dry method or a post-addition wet method, a content (e.g., amount) of coating elements on the surface of the active material may be further increased. For example, a coating content (e.g., amount) on the surface of the first positive electrode active material, which is measured through Energy Dispersive Spectroscopy (EP-EDS) analysis, may be about 5 at% to about 35 at%, for example, about 5 at% to about 30 at%, about 5 at% to about 25 at%, or about 10 at% to about 20 at% based on 100 at% of a total metal excluding lithium of (in) the first positive electrode active material. Within the content (e.g., amount) ranges, the coating layer may not increase resistance of the first positive electrode active material and also, effectively improve high voltage characteristics.

The coating layer may be in the form of a film that continuously surrounds the surface of the core particle, for example, or may be in the form of a shell that surrounds the entire surface of the core particle. This is distinct from a structure in which only a portion of the surface of the core particle is partially coated. According to one or more embodiments, the coating layer may be formed to entirely cover the surface of the core particle and may be formed to be very thin and substantially uniform in thickness, and therefore the positive electrode active material does not increase resistance or decrease capacity, improves structural stability, effectively suppresses side reactions with electrolytes, reduces the amount of gas generated under high-voltage and high-temperature conditions, and achieves long cycle-life characteristics.

According to the method of the present disclosure, a thickness of the coating layer of the first positive electrode active material may be about 5 nanometers (nm) to about 200 nm, for example, about 5 nm to about 150 nm, about 5 nm to about 100 nm, about 5 nm to about 80 nm, about 5 nm to about 50 nm, or about 10 nm to about 50 nm. If (e.g., when) the coating layer satisfies the thickness range, the structural stability of the positive electrode active material may be improved without increasing resistance or reducing capacity due to the coating, and the side reaction with the electrolyte may be effectively suppressed or reduced. The thickness of the coating layer may be measured through, for example, Scanning Electron Microscope (SEM), Transmission Electron Microscopy (TEM), Time-of-Flight Secondary Ion Mass Spectrometry (TOF-SIMS), X-ray photoelectron spectroscopy (XPS), or EDS analysis, and, for example, may be measured through EDS line profile analysis of the cross-section of the positive electrode active material.

The coating layer according to one or more embodiments is characterized by being thin and substantially uniform in thickness, at the level of several to hundreds (e.g. tens to hundreds) of nanometers. For example, the deviation in coating layer thickness in one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above range refers to that a coating layer of substantially uniform thickness is formed in a form of a good or suitable film on the surface of the positive electrode active material particle. Accordingly, the structural stability of the positive electrode active material is improved, side reactions with the electrolyte may be effectively suppressed or reduced, and the increase in resistance or decrease in capacity due to coating may be minimized or reduced.

A content (e.g., amount) of the coating element based on 100 mol% of a total metal excluding lithium in the entire first positive electrode active material will vary depending on the type or kind of coating element, but may be about 0.01 mol% to about 3 mol%, for example, about 0.05 mol% to about 2 mol%, or about 0.1 mol% to about 1.5 mol%.

For example, if (e.g., when) introducing an Al coating layer, an Al content (e.g., amount) of the coating layer may be about 0.1 mol% to about 3.0 mol%, for example, about 0.1 mol% to about 2.0 mol%, about 0.5 mol% to about 1.5 mol%, or about 0.7 mol% to about 1.3 mol% based on 100 mol% of a total metal excluding lithium in the entire positive electrode active material.

When introducing an Al coating layer, the coating layer may include, for example, a layered aluminium compound, aluminium oxide, lithium-aluminium oxide, LiAlO₂, and/or a (e.g., any suitable) combination thereof.

In one or more embodiments, the first positive electrode active material may contain a sulfur (S) component on the surface, and this may be a characteristic derived by applying a sulfate-based coating material such as aluminium sulfate during the coating process.

### Second Positive Electrode Active Material

The second positive electrode active material includes lithium cobalt-based oxide in a form of single particles, and the single particles have an average particle diameter (D₅₀) of about 1 µm to about 9 µm.

An average particle diameter (D₅₀) of single particles of the second positive electrode active material may be, for example, about 1 µm to about 8 µm, about 2 µm to about 6 µm, or about 2.5 µm to about 5.5 µm. The shape of the single particle may be a sphere, an elliptical sphere, a polyhedron, or an irregular shape.

For example, in one or more embodiments, the lithium cobalt-based oxide of the second positive electrode active material may be represented by Chemical Formula 2.

**Chemical Formula 2** **Liₐ₂COₓ₂M²_{w2}O_{2-b2}X_{b2}**

In Chemical Formula 2, 0.9≤a2≤1.8, 0.8≤x2≤1, 0≤w2≤0.2, 0.9≤x2+w2≤1.1, 0≤b2≤0.1, M² may be one or more elements selected from among Al, B, Ba, Ca, Ce, Cr, Cu, F, Fe, Mg, Mn, Mo, Nb, P, S, Si, Sr, Ti, V, W, Zn, and Zr, and X may be one or more elements selected from among F, P, and S.

In one or more embodiments, in Chemical Formula 2, 0.9≤a2≤1.5, or 0.9≤a2 ≤1.2, or 1.01≤a2≤1.2, 0.9≤a2≤1, or 0.95≤a2≤0.99.

In one or more embodiments, the lithium cobalt-based oxide may further include Al, Mg, and/or a (e.g., any suitable) combination thereof, and the Al, Mg, and/or a (e.g., any suitable) combination thereof may be expressed as a dopant. For example, in one or more embodiments, the lithium cobalt-based oxide may be doped with only Al or both (e.g., simultaneously) Al and Mg.

In one or more embodiments, a content (e.g., amount) of the dopant, that is, Al, Mg, and/or a (e.g., any suitable) combination thereof, may be about 0.1 mol% to about 3 mol%, for example, about 0.2 mol% to about 2.5 mol%, about 0.4 mol% to about 2.0 mol%, or about 0.5 mol% to about 1.5 mol%, based on 100 mol% of a total metal excluding lithium in the lithium cobalt-based oxide.

In one or more embodiments, each of the single particles of the second positive electrode active material may include a core particle including lithium cobalt-based oxide, and a coating layer located on the surface of the core particle and containing a coating element selected from among Al, B, Mg, Ti, V, W, Y, Zr, and/or a (e.g., any suitable) combination thereof. In one or more embodiments, the coating layer may include Zr, Ti, and/or a (e.g., any suitable) combination thereof.

A content (e.g., amount) of the coating element of the coating layer may be about 0.1 mol% to about 2 mol%, for example, about 0.1 mol% to about 1.5 mol%, or about 0.2 mol% to about 1.0 mol% based on 100 mol% of a total metal excluding lithium in the lithium cobalt-based oxide.

### Pellet Density

The positive electrode active material according to one or more embodiments may achieve high pellet density. For example, in one or more embodiments, the pellet density of the positive electrode active material may be about 3.2 g/cc to about 3.7 g/cc, for example, about 3.2 g/cc to about 3.6 g/cc, or about 3.2 g/cc to about 3.5 g/cc. Rechargeable lithium batteries using these positive electrode active materials may achieve high energy density.

The pellet density may be measured in the following way. After weighing 3 g of the positive electrode active material, the positive electrode active material is put into a mold (area: 1.298 cm²) and the mold bar is slowly inserted into the body of the mold. The pellet density may be measured by placing the Mold SET (e.g., the mold with the mold bar) in a hydraulic press and pressing it at a pressure of 4 ton (Metric ton) for 30 seconds, then measuring the height. For example, the measuring of pellet density using the Mold SET includes the following tasks: weigh 3 g of positive electrode material; place it in a mold (area: 1.298 cm²); insert the mold bar into the mold; apply 4 metric tons of pressure using a hydraulic press for 30 seconds; and measure the resulting pellet height.

### Positive Electrode

In one or more embodiments, a positive electrode includes a positive electrode current collector and a positive electrode active material layer on the positive electrode current collector, wherein the positive electrode active material layer includes the positive electrode active material of one or more embodiments. In one or more embodiments, the positive electrode active material layer may further include other types (kinds) of positive electrode active materials in addition to the positive electrode active materials of the present disclosure. Additionally, the positive electrode active material layer may optionally further include a binder, a conductive material (e.g., electron conductor), and/or a (e.g., any suitable) combination thereof.

### Binder

The binder improves binding properties of positive electrode active material particles with one another and with the positive electrode current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto. A content (e.g., amount) of the binder may be about 0.5 wt% to about 5 wt%, for example, about 0.5 wt% to about 3 wt%, or about 0.5 wt% to about 1.5 wt%, based on 100 wt% of a total weight of the positive electrode active material layer.

### Conductive Material

The conductive material may be included to provide electrode conductivity and any electrically conductive material may be used as a conductive material unless it causes a chemical change. Non-limiting examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

The positive electrode according to one or more embodiments, in which the first positive electrode active material and the second positive electrode active material are appropriately or suitably mixed, may easily transfer lithium ions and maximize or increase electrode plate density. Accordingly, the positive electrode, even though it contains a small amount of conductive material, may achieve excellent or suitable performance. For example, in one or more embodiments, the conductive material may be included in an amount of about 0.1 wt% to about 0.9 wt%, for example, about 0.1 wt% to about 0.8 wt%, about 0.1 wt% to about 0.7 wt%, about 0.1 wt% to about 0.6 wt%, or about 0.2 wt% to about 0.5 wt%, based on 100 wt% of a total weight of the positive electrode active material layer. Even if the conductive material is included in such as small amount, the positive electrode may achieve excellent or suitable electrochemical performance.

The positive electrode current collector may include aluminium (Al), but embodiments of the present disclosure are not limited thereto.

### X-ray Diffraction Analysis (XRD) for Positive Electrode

The positive electrode manufactured by appropriately or suitably mixing the first positive electrode active material and the second positive electrode active material according to one or more embodiments may have I₍₀₀₃₎/I₍₁₀₄₎, which is a ratio of peak intensity of (003) crystal plane to that of (104) crystal plane, in a range of about 10 to about 45, for example, about 10 to about 30, or about 10 to about 25 according to X-ray diffraction analysis. For example, a positive electrode manufactured by applying the first positive electrode active material alone may have a I₍₀₀₃₎/I₍₁₀₄₎ ratio of less than about 10, but the positive electrode manufactured by appropriately or suitably mixing the first positive electrode active material and the second positive electrode active material according to one or more embodiments may exhibit a peak intensity ratio of about 10 or more due to improved orientation.

In addition, according to the X-ray diffraction analysis for the positive electrode, a full width at half maximum (FWHM) on the (003) crystal plane may be about 0.05 to about 0.14, for example, about 0.06 to about 0.14, or about 0.07 to about 0.13. For example, the positive electrode manufactured by applying the first positive electrode active material alone may have a full width at half maximum (FWHM) of about 0.14 on the (003) crystal plane, but the positive electrode manufactured by appropriately or suitably mixing the first positive electrode active material and the second positive electrode active material according to one or more embodiments may have a full width at half maximum (FWHM) of less than or equal to about 0.14 due to improved crystallinity or orientation.

### Rechargeable Lithium Battery

According to one or more embodiments, a rechargeable lithium battery may include the aforementioned positive electrode, a negative electrode, and an electrolyte. In one or more embodiments, the rechargeable lithium battery may include the positive electrode, a negative electrode, a separator between the positive electrode and the negative electrode, and an electrolyte.

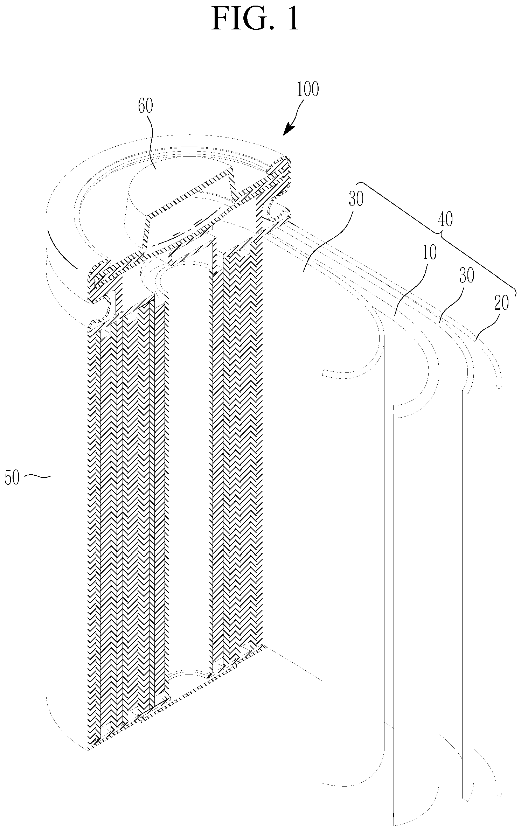

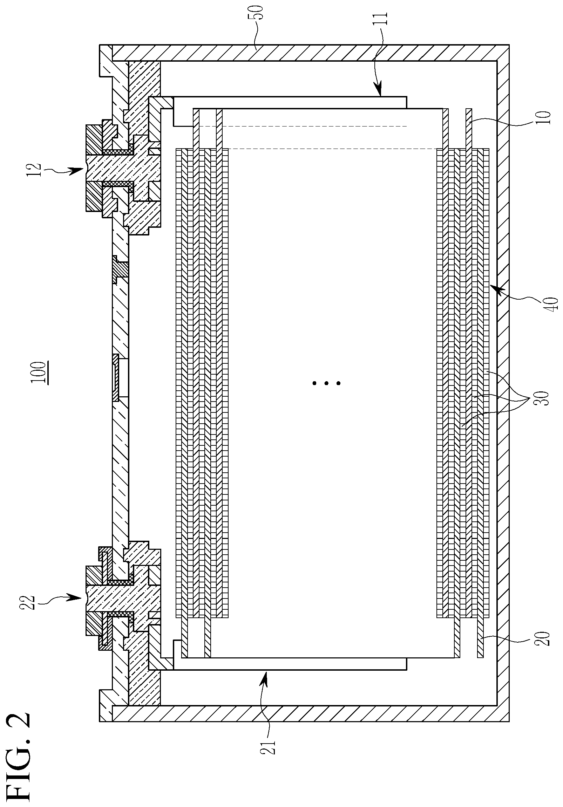

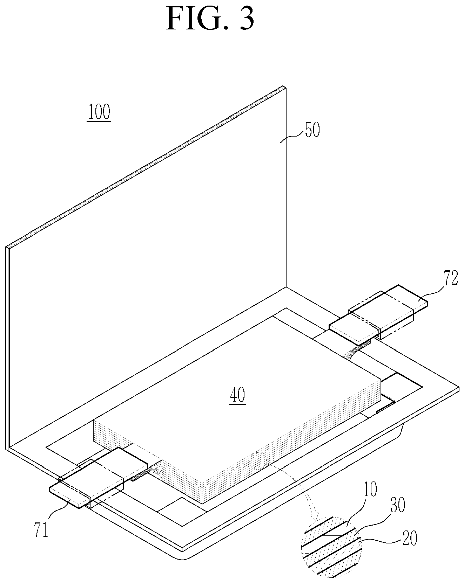

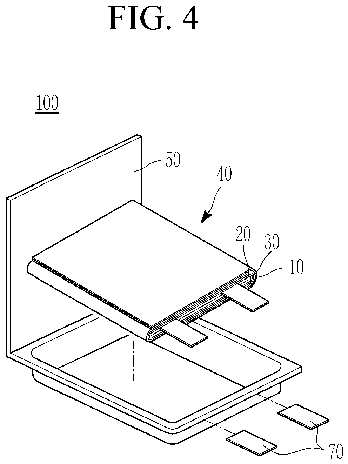

The rechargeable lithium battery may be classified into cylindrical, prismatic, pouch, coin, and/or the like, depending on the shape thereof. FIGS. 1 to 4 are each a schematic diagram showing a rechargeable lithium battery according to one or more embodiments, where FIG. 1 shows a cylindrical battery, FIG. 2 shows a prismatic battery, and FIGS. 3 and 4 each show a pouch-shaped battery. Referring to FIGS. 1 to 4, the rechargeable lithium battery 100 may include an electrode assembly 40 with a separator 30 interposed between a positive electrode 10 and a negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 may include an electrode tab 70, that is, a positive electrode tab 71 and a negative electrode tab 72 serving as an electrical path for inducing the current formed in the electrode assembly 40 to the outside.

A rechargeable lithium battery according to one or more embodiments may be rechargeable at high voltage, or may be suitable for operation at high voltage, and may be a battery with improved characteristics under high voltage conditions.

### Negative Electrode

The negative electrode may include a negative electrode current collector and a negative electrode active material layer on the negative electrode current collector, and the negative electrode active material layer may include a negative electrode active material, a binder, a conductive material (e.g., electron conductor), and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregular-shaped, sheet-shaped, flake-shaped, sphere-shaped, or fiber shaped natural graphite or artificial graphite. The amorphous carbon may be a soft carbon, a hard carbon, a mesophase pitch carbonization product, calcined coke, and/or the like.

The lithium metal alloy includes an alloy of lithium and one or more metals selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, magnesium (Mg), calcium (Ca), strontium (Sr), barium (Ba), radium (Ra), scandium (Sc), yttrium (Y,) titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (Tl), germanium (Ge), phosphorous (P), arsenic (As), antimony (Sb), bismuth (Bi), sulfur (S), selenium (Se), tellurium (Te), polonium (Po), and a (e.g., any suitable) combination thereof), or a (e.g., any suitable) combination thereof. The Sn-based negative electrode active material may be Sn, SnOₓ (0 < x ≤ 2), SnO₂, a Sn alloy, and/or a (e.g., any suitable) combination thereof.

The silicon-carbon composite may be a composite of silicon and amorphous carbon, in a form of particles. An average particle diameter (D₅₀) of the silicon-carbon composite particles may be, for example, about 0.5 µm to about 20 µm. According to one or more embodiments, the silicon-carbon composite may be in the form of silicon particles and amorphous carbon coated on the surface of the silicon particles. For example, in one or more embodiments, the silicon-carbon composite may include a secondary particle (core) in which silicon primary particles are assembled (e.g., agglomerated) and an amorphous carbon coating layer (shell) on the surface of the secondary particle. In one or more embodiments, the amorphous carbon may also be present between the silicon primary particles, for example, the silicon primary particles may be coated with amorphous carbon. The secondary particles may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and/or calcined coke.

If (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of a total weight of the silicon-carbon composite. In addition, if (e.g., when) the silicon-carbon composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of a total weight of the silicon-carbon composite.

In one or more embodiments, a thickness of an amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). In this regard, an atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

In one or more embodiments, the Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and used, a mixing ratio thereof may be a weight ratio of about 1:99 to about 90:10.

### Binder

The binder serves to suitably and/or well adhere the negative electrode active material particles to each other and also to adhere the negative electrode active material to the negative electrode current collector. The binder may be a non-aqueous binder, an aqueous (e.g., a water-soluble binder) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is used as the binder for the negative electrode, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material may be included to provide electrode conductivity, and any electrically conductive material may be used as a conductive material unless it causes a chemical change. Non-limiting examples of the conductive material include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

In one or more embodiments, a content (e.g., amount) of the negative electrode active material may be about 95 wt% to about 99.5 wt% based on 100 wt% of a total weight of the negative electrode active material layer, and a content (e.g., amount) of the binder may be about 0.5 wt% to about 5 wt% based on 100 wt% of the total weight of the negative electrode active material layer. For example, in one or more embodiments, the negative electrode active material layer may include about 90 wt% to about 99 wt% of the negative electrode active material, about 0.5 wt% to about 5 wt% of the binder, and about 0.5 wt% to about 5 wt% of the conductive material, based on 100 wt% of the total weight of the negative electrode active material layer.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, a sheet, or a foam. A thickness of the negative electrode current collector may be, for example, about 1 µm to about 20 µm, about 5 µm to about 15 µm, or about 7 µm to about 10 µm.

### Electrolyte

In one or more embodiments, the electrolyte for a rechargeable lithium battery may be an electrolyte, which may include a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, or an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), and/or the like; amides such as dimethylformamide; dioxolanes such as 1,3-dioxolane, 1,4-dioxolane, and/or the like; sulfolanes; and/or the like.

The non-aqueous organic solvent may be used alone or in a mixture of two or more types (kinds), and if (e.g., when) two or more types (kinds) are used in a mixture, a mixing ratio may be appropriately or suitably adjusted according to the desired or suitable battery performance, which is widely suitable to those working in the field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, in some embodiments, a carbonate-based solvent and an aromatic hydrocarbon-based organic solvent may be mixed and used in a volume ratio of about 1:1 to about 30:1.

In one or more embodiments, the electrolyte may further include vinylethylene carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a rechargeable lithium battery, enables a basic operation of the rechargeable lithium battery, and improves transportation of the lithium ions between positive and negative electrodes. Non-limiting examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte has appropriate or suitable ionic conductivity and viscosity, and thus excellent or suitable performance may be achieved and lithium ions may move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, and/or a (e.g., any suitable) combination thereof on one or both (e.g., simultaneously) surfaces (e.g., opposite surfaces) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and/or a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but embodiments of the present disclosure are not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure are described in more detail. However, the following examples are mere examples of the present disclosure, and the present disclosure is not limited to the following examples.

### Example 1

### 1. Preparation of Positive Electrode Active Material

### (1) Preparation of First Positive Electrode Active Material

Ni_{0.75}Mn_{0.25}(OH)₂ and LiOH were mixed in a molar ratio of Li/(Ni+Mn) =1.05 and then, primarily heat-treated at 780 °C for 8 hours under an oxygen atmosphere to prepare a lithium nickel-manganese-based composite oxide with a composition of Li_{1.05}Ni_{0.75}Mn_{0.25}O₂ in the form of secondary particles with an average particle diameter (D₅₀) of about 13.8 µm.

In addition, a coating solution was prepared by adding aluminium sulfate to a distilled water solvent and stirring the mixture for about 5 minutes at about 350 rpm. The coating solution was checked to be colorless transparent, as the salts were completely dissolved. Subsequently, 500 g of the lithium nickel-manganese-based composite oxide was added to the coating solution, which was being stirred, for 1.5 minutes and then, kept being stirred for about 45 minutes. Herein, an aluminium content (e.g., amount) in the aluminium sulfate was designed to be 1.0 mol% based on 100 mol% of a total metal excluding lithium in a first positive electrode active material. When the stirring was completed, a supernatant was confirmed to have pH 5.5. After removing the solvent from the mixed solution by using an aspirator and a filter press, a coating product was obtained by vacuum-drying at 180 °C.

The coating product was secondarily heat-treated at 750 °C for 8 hours under an oxygen atmosphere to prepare the first positive electrode active material in the form of secondary particles containing the lithium nickel-manganese-based composite oxide (Li_{1.05}Ni_{0.75}Mn_{0.25}O₂), having an average particle diameter (D₅₀) of about 14 µm, and uniformly (e.g., substantially uniformly) coated with aluminium on the surface.

### (2) Preparation of Second Positive Electrode Active Material

Co(OH)₂ and Li₂CO₃ were mixed in a molar ratio of Li/Co=1.02 and then, heat-treated at about 900 °C under an air atmosphere for 10 hours to prepare lithium cobalt-based oxide (Li_{1.02}CoO₂) in the form of single particles with an average particle diameter (D₅₀) of about 4 µm. Subsequently, Al(OH)₃ was added thereto to have 1 mol% of Al based on 100 mol% of total metal excluding lithium and then, heat-treated at 800 °C for 5 hours to coat Al on the surface of the lithium cobalt-based oxide single particles, preparing a second positive electrode active material.

### (3) Preparation of Final Positive Electrode Active Material

The first positive electrode active material and the second positive electrode active material were mixed in a weight ratio of 75:25, preparing a final positive electrode active material. The final positive electrode active material was pressed with 4 tons for 30 seconds and then, measured with respect to pellet density, which was about 3.2 g/cc.

### 2. Manufacturing of Positive Electrode

98.5 wt% of the positive electrode active material, 1.0 wt% of a polyvinylidene fluoride binder, and 0.5 wt% of a carbon black conductive material were mixed to prepare a positive electrode active material layer slurry, and the positive electrode active material layer slurry was coated on an aluminium foil current collector and then, dried and compressed to manufacture a positive electrode.

### 3. Manufacturing of Rechargeable Lithium Battery Cells

A coin half-cell was manufactured by using the positive electrode and a lithium metal counter electrode, interposing a polytetrafluoroethylene separator therebetween to manufacture an electrode assembly, inserting the electrode assembly into a case, and implanting/injecting an electrolyte solution prepared by dissolving 1 M LiPF₆ in a mixed solvent of ethylene carbonate and dimethyl carbonate in a volume ratio of 3:7 thereinto in a common method.

### Example 2

A positive electrode active material and a rechargeable lithium battery cell were manufactured in substantially the same manner as in Example 1 except that the first positive electrode active material and the second positive electrode active material were mixed in a weight ratio of 50:50 to prepare the final positive electrode active material.

The final positive electrode active material of Example 2 had pellet density of about 3.5 g/cc.

### Example 3

A positive electrode active material and a rechargeable lithium battery cell were manufactured in substantially the same manner as in Example 1 except that the first positive electrode active material and the second positive electrode active material were mixed in a weight ratio of 25:75 to prepare the final positive electrode active material.

The final positive electrode active material of Example 3 had pellet density of about 3.4 g/cc.

### Comparative Example 1

A positive electrode active material and a rechargeable lithium battery cell were manufactured in substantially the same manner as in Example 1 except that the first positive electrode active material alone was used.

### Comparative Example 2

A positive electrode active material and a rechargeable lithium battery cell were manufactured in substantially the same manner as in Example 1 except that the second positive electrode active material alone was used.

### Evaluation Example 1: X-ray Diffraction Analysis of Positive Electrode

X-ray diffraction analysis (XRD) on each of the positive electrode plates according to Examples 1 to 3 and Comparative Examples 1 and 2 was performed to obtain a peak intensity ratio I₍₀₀₃₎/I₍₁₀₄₎ of peak intensity of the 003 crystal plane to that of the 104 crystal plane and a full width at half maximum (FWHM) on the 003 crystal plane, and the results are provided in Table 1. The XRD was performed using a D8 Advance from Bruker under the following conditions:
- X-ray wavelength: 1.5406 Å (CuKα1)
- Slit conditions: Divergence Slit 0.5°, Scattering Slit 0.5°, Receiving Slit 0.20 mm
- Scan conditions: Continuous Scan, 10°≤2θ≤80°, 0.01°/step, 1.27°/min, total measurement time 55 min.

**Table 1**

| | Comparative Example 1 | Example 1 | Example 2 | Example 3 | Comparative Example 2 |
|---|---|---|---|---|---|
| | (100:0) | (75:25) | (50:50) | (25:75) | (0:100) |
| I₍₀₀₃₎/I₍₁₀₄₎ | 1.521 | 12.943 | 24.393 | 43.86 | 47.352 |
| FWHM₍₀₀₃₎ | 0.154 | 0.128 | 0.077 | 0.08 | 0.089 |

Referring to Table 1, when the mixing ratio of the second positive electrode active material containing lithium cobalt-based oxide increases, the I₍₀₀₃₎/I₍₁₀₄₎ ratio increases, but the full width at half maximum (FWHM) on the 003 crystal plane decreases and then levels off.

### Evaluation Example 2: Evaluation of Initial Charge/discharge Capacity and Capacity per Volume

Each of the coin half-cells according to Examples 1 to 3 and Comparative Examples 1 and 2 was charged to an upper limit voltage of 4.5 V at a constant current of 0.2 C and discharged to a cut-off voltage of 3.0 V at 0.2 C at 25 °C to measure initial charge/discharge capacity, and the results are shown in Table 2. In addition, each discharge capacity was multiplied with the pellet density of each of the positive electrode active materials to calculate capacity per volume, which is provided in Table 2.

**Table 2**

| | Charge capacity | Discharge capacity | Pellet density | Discharge capacity per volume |
|---|---|---|---|---|
| | (mAh/g) | (mAh/g) | (g/cc) | (mAh/cc) |
| Comparative Example 1 (100:0) | 235.4 | 201.4 | 3.0 | 604.2 |
| Example 1 (75:25) | 226.0 | 194.6 | 3.2 | 622.8 |
| Example 2 (50:50) | 214.6 | 184.9 | 3.5 | 647.2 |
| Example 3 (25:75) | 203.3 | 178.9 | 3.4 | 608.3 |
| Comparative Example 2 (0:100) | 192.4 | 175.0 | 3.3 | 577.5 |

Referring to Table 2, when the mixing ratio of the second positive electrode active material increases, the charge/discharge capacity per weight first increases and then decreases. For example, Examples 1 to 3 each exhibited higher pellet density than Comparative Example 1, among which Example 2 using the first and second positive electrode active materials in a weight ratio of 50:50 exhibited the highest pellet density. Examples 1 to 3 each achieved much higher capacity per volume according to changes in density than Comparative Examples 1 and 2. Example 2 exhibited the highest capacity per volume (647.2 mAh/cc), and Example 1 exhibited the second highest capacity per volume (622.8 mAh/cc). Example 3 exhibited that the lower initial charge/discharge capacity, the higher mixing ratio of the second positive electrode active material and thus a little lower improvement effect of the capacity per volume, but Examples 1 and 2 each exhibited the higher improvement effect of the capacity per volume.

### Evaluation Example 3: Evaluation of Cycle-life Characteristics

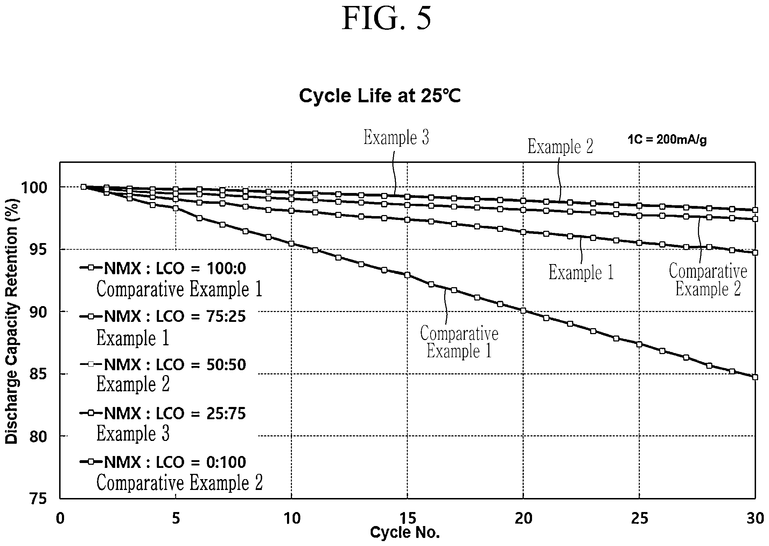

Following Evaluation Example 2, the coin half-cells of Examples 1 to 3 and Comparative Examples 1 and 2 were each 30 cycles or more charged and discharged at 1.0 C within a voltage range of 3.0 V to 4.5 V at 25 °C to measure capacity retention according to the number of cycles, and the results are shown in FIG. 5.

Referring to FIG. 5 and Table 2, Examples 1 to 3 each exhibited improved cycle-life characteristics, compared to Comparative Example 1 using the first positive electrode active material alone. Examples 2 and 3 each exhibited much higher cycle-life characteristics than Comparative Example 2 using the second positive electrode active material alone. Comparative Example 1 using the first positive electrode active material alone exhibited high initial charge/discharge capacity but had a problem of deteriorating cycle-life characteristics such as cracks and/or the like due to structural instability of the positive electrode active material at a high voltage. The Examples using the first and second positive electrode active materials in an appropriate or suitable ratio not only overcame the problems but also improved cycle-life characteristics and concurrently (e.g., simultaneously), improved capacity per volume, and thus achieved high energy density. For example, Examples 1 and 2 each using the first positive electrode active material in an amount of 50 wt% to 75 wt% and the second positive electrode active material in an amount of 25 wt% to 50 wt% were confirmed to maximize or increase capacity per volume and also significantly improve cycle-life characteristics.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While this disclosure has been described in connection with what is presently considered to be practical example embodiments, it is to be understood that present disclosure is not limited to the disclosed embodiments. In contrast, it is intended to cover one or more suitable modifications and equivalent arrangements included within the scope of the appended claims and equivalents thereof.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising
a first positive electrode active material comprising a layered lithium nickel-manganese-based composite oxide having a nickel content of greater than or equal to 70 mol% based on 100 mol% of a total metal excluding lithium in the first positive electrode active material, and being in a form of secondary particles each comprising a plurality of primary particles, an average particle diameter (D₅₀) of the secondary particles being 10 µm to 25 µm, and
a second positive electrode active material comprising a lithium cobalt-based oxide and being in the form of single particles, an average particle diameter (D₅₀) of the single particles being 1 µm to 9 µm,
wherein a difference between the average particle diameter (D₅₀) of the secondary particles of the first positive electrode active material and the average particle diameter (D₅₀) of the single particles of the second positive electrode active material is greater than or equal to 5 µm.

2. The positive electrode active material as claimed in claim 1, wherein,
if the average particle diameter (D₅₀) of the first positive electrode active material is a and the average particle diameter (D₅₀) of the second positive electrode active material is b, then 5 µm ≤a-b≤15 µm or 3b≤a≤4b.

3. The positive electrode active material as claimed in claim 1 or claim 2, wherein,
based on a total weight of 100 wt% of the first positive electrode active material and the second positive electrode active material, the first positive electrode active material is in an amount of 25 wt% to 95 wt% and the second positive electrode active material is in an amount of 5 wt% to 75 wt%, optionally wherein,
based on the total weight of 100 wt% of the first positive electrode active material and the second positive electrode active material, the first positive electrode active material is in an amount of 50 wt% to 95 wt% and the second positive electrode active material is in an amount of 5 wt% to 50 wt%.

4. The positive electrode active material as claimed in any one of claims 1 to 3, wherein,
the layered lithium nickel-manganese-based composite oxide of the first positive electrode active material comprises 70 mol% to 85 mol% of nickel, at least 15 mol% of manganese, and at most 3 mol% of aluminium based on 100 mol% of a total metal excluding lithium in the layered lithium nickel-manganese-based composite oxide.

5. The positive electrode active material as claimed in any one of claims 1 to 4, wherein,
in the layered lithium nickel-manganese-based composite oxide of the first positive electrode active material, based on 100 mol% of a total metal excluding lithium, a cobalt content is at most 0.01 mol%.

6. The positive electrode active material as claimed in any one of claims 1 to 5, wherein,
the layered lithium nickel-manganese-based composite oxide of the first positive electrode active material is represented by Chemical Formula 1:
Chemical Formula 1 Liₐ₁Niₓ₁Mn_{y1}Al_{z1} M¹_{w1}O_{2-b1}X_{b1},
in Chemical Formula 1,
0.9≤a1≤1.8, 0.7≤x1≤0.85, 0.15≤y1≤0.3, 0≤z1≤0.03, 0≤w1≤0.1, 0.9≤x1+y1+z1+w1≤1.1, and 0≤b1≤0.1,
M¹ being one or more elements selected from among B, Ba, Ca, Ce, Cr, Fe, Mg, Mo, Nb, Si, Sn, Sr, Ti, V, W, Y, and Zr, and
X being one or more elements selected from among F, P, and S.

7. The positive electrode active material as claimed in any one of claims 1 to 6, wherein,
the secondary particles of the first positive electrode active material comprise
core particles comprising the layered lithium nickel-manganese-based composite oxide, and
a coating layer on a surface of each of the core particles and containing a coating element selected from among Al, B, Mg, Ti, V, W, Y, Zr, and a combination thereof.

8. The positive electrode active material as claimed in claim 7, wherein:
(i) the coating layer contains Al and is in a form of a shell that continuously surrounds the surface of each of the core particles; and/or
(ii) a thickness of the coating layer is 5 nm to 200 nm, and
a content of the coating element of the coating layer is 0.1 mol% to 3 mol% based on 100 mol% of the total metal excluding lithium in the first positive electrode active material.

9. The positive electrode active material as claimed in any one of claims 1 to 8, wherein,
the lithium cobalt-based oxide of the second positive electrode active material is represented by Chemical Formula 2:
Chemical Formula 2 Liₐ₂Coₓ₂M²_{w2}O_{2-b2}X_{b2}
in Chemical Formula 2,
0.9≤a2≤1.8, 0.8≤x2≤1, 0≤w2≤0.2, 0.9≤x2+w2≤1.1, 0≤b2≤0.1
M² being one or more elements selected from among Al, B, Ba, Ca, Ce, Cr, Cu, F, Fe, Mg, Mn, Mo, Nb, P, S, Si, Sr, Ti, V, W, Zn, and Zr, and
X being one or more elements selected from among F, P, and S.

10. The positive electrode active material as claimed in any one of claims 1 to 9, wherein,
the lithium cobalt-based oxide of the second positive electrode active material further comprises Al, Mg, or a combination thereof, and a content of Al, Mg, or a combination thereof is 0.1 mol% to 3 mol% based on 100 mol% of a total metal excluding lithium in the lithium cobalt-based oxide.

11. The positive electrode active material as claimed in any one of claims 1 to 10, wherein,
each of the single particles of the second positive electrode active material comprises a core particle comprising a lithium cobalt-based oxide, and a coating layer on a surface of the core particle and containing a coating element selected from among Al, B, Mg, Ti, V, W, Y, Zr, and a combination thereof, optionally wherein,
a content of the coating element of the coating layer is 0.1 mol% to 2 mol% based on 100 mol% of a total metal excluding lithium in the second positive electrode active material.

12. The positive electrode active material as claimed in any one of claims 1 to 11, wherein,
the positive electrode active material has a pellet density of 3.2 g/cc to 3.7 g/cc.

13. A positive electrode, comprising
a positive electrode current collector, and
a positive electrode active material layer on the positive electrode current collector and comprising the positive electrode active material as claimed in any one of claims 1 to 12,
wherein the positive electrode is for a rechargeable lithium battery.

14. The positive electrode as claimed in claim 13, wherein:
(i) the positive electrode active material layer further comprises a conductive material, and
a content of the conductive material is 0.1 wt% to 0.9 wt% based on 100 wt% of a total weight of the positive electrode active material layer; and/or
(ii) I₍₀₀₃₎/I₍₁₀₄₎, which is a ratio of a peak intensity of a (003) crystal plane to a peak intensity of a (104) crystal plane according to X-ray diffraction analysis of the positive electrode, is 10 to 45; and/or
(iii) the positive electrode has a full width at half maximum (FWHM) at (003) crystal plane of 0.05 to 0.14 according to X-ray diffraction analysis of the positive electrode.

15. A rechargeable lithium battery, comprising
the positive electrode as claimed in claim 13 or claim 14,
a negative electrode, and
an electrolyte.
